# EUROPEAN PATENT SPECIFICATION

(11) **EP 4 455 841 B1**
(45) Date of publication and mention of the grant of the patent: **11.11.2026**
(21) Application number: 24171721.4
(22) Date of filing: 22.04.2024
(51) Int. Cl.: G06F 3/0346, G06F 3/0481, G06F 3/0484, G06F 3/0487, G06F 3/0489

(54) **APPLICATION WINDOW ADJUSTMENT METHOD AND APPARATUS, DEVICE, AND MEDIUM**
VERFAHREN UND VORRICHTUNG ZUR EINSTELLUNG EINES ANWENDUNGSFENSTERS, VORRICHTUNG UND MEDIUM
PROCÉDÉ ET APPAREIL DE RÉGLAGE DE FENÊTRE D'APPLICATION, DISPOSITIF ET SUPPORT

(30) Priority: 23.04.2023 CN 202310446230
(43) Date of publication of application: 30.10.2024
(73) Proprietor: Beijing Zitiao Network Technology Co., Ltd., Beijing 100190 (CN)
(72) Inventor: GUO, Jianqing, Beijing 100028 (CN); WANG, Guotao, Beijing 100028 (CN); LIU, Qingping, Beijing 100028 (CN); CHEN, Yepeng, Beijing 100028 (CN); GE, Tingbin, Beijing 100028 (CN); QI, Qi, Beijing 100028 (CN)
(74) Representative: Marks & Clerk LLP

(56) References cited:
- EP-A1- 2 985 993
- EP-A1- 3 051 513
- EP-A2- 2 738 743
- WO-A1-2022/222688
- CN-A- 110 465 073
- CN-A- 115 205 500
- US-A1- 2007 080 940
- US-A1- 2012 223 886
- US-A1- 2018 033 204
- US-A1- 2021 019 946

## Description

### Cross-reference to Related Application

The present application claims priority of the Chinese Patent Application No. 202310446230.X, filed on April 23, 2023, the disclosure of which is incorporated herein by reference in the present application.

### Technical Field

Embodiments of the present application relate to the technical field of extended reality (XR), and in particular, to an application window adjustment method and apparatus, a device, and a medium.

### Background

Currently, XR devices may have a large number of three-dimensional application programs (3D applications) and a large number of two-dimensional application programs (2D applications) installed thereon, to meet various usage requirements of users. When using a 2D application in a virtual space provided by an XR device, a user often has a need to adjust a 2D application window. Therefore, how to support the user to adjust the 2D application window in the virtual space on the XR device has become a current pressing issue.
Reference D1 (US20120223886A1) discloses a rapid screen control input system.
Reference D2 (EP3051513A1) discloses a display apparatus and a control method thereof.
Reference D3 (EP2985993A1) discloses a device and a control method for the device.
Reference D4 (US20070080940A1) discloses a remote control system, and a display device and an electronic device using the remote control system.

US 2018/033204 discloses an XR device with GUI elements to be manipulated by head tracking and/or standard input devices, the latter inter alia game controller. Rotation of a window based on a rotation of the game controller about itself.

### Summary

The present application provides an application window adjustment method and apparatus, a device, and a medium, by which the purpose of adjusting a 2D application window in a virtual space is achieved, so that the need of a user to adjust the 2D application window is met, and the user experience is improved.

According to a first aspect, an embodiment of the present application provides an application window adjustment method according to independent claim 1.

According to a second aspect, an embodiment of the present application provides an application window adjustment apparatus according to independent claim 10.

According to a third aspect, an embodiment of the present application provides an electronic device, the device including:
a processor and a memory, where the memory is configured to store a computer program, and the processor is configured to call and run the computer program stored in the memory, to perform the application window adjustment method according to the embodiment of the first aspect or various implementations thereof.

According to a fourth aspect, an embodiment of the present application provides a computer-readable storage medium, which is configured to store a computer program, where the computer program causes a computer to perform the application window adjustment method according to the embodiment of the first aspect or various implementations thereof.

According to a fifth aspect, an embodiment of the present application provides a computer program product including program instructions, where the program instructions, when run on an electronic device, cause the electronic device to perform the application window adjustment method according to the embodiment of the first aspect or various implementations thereof.

The technical solutions disclosed in the embodiments of the present application have at least the following beneficial effects.

The target application window is displayed in the virtual space in response to the selection instruction for the target application; when the trigger operation for the target button on the controller is detected, the display position of the cursor corresponding to the controller is obtained; and when the display position of the cursor is located on the target application window, the target application window is adjusted based on the movement trajectory of the cursor. According to the present application, an application window adjustment function is set in association with any button on the controller, so that the user can enable the application window adjustment function by triggering the button on the controller, and then adjust an application window displayed in the virtual space by manipulating the controller. In this way, with full use of freedom and flexibility of the controller in the space, the purpose of adjusting a 2D application window in the virtual space is achieved, so that the need of the user to adjust the 2D application window is met, and the user experience is improved.

### Brief Description of the Drawings

To describe the technical solutions in the embodiments of the present application more clearly, the following briefly describes the accompanying drawings required for describing the embodiments. Apparently, the accompanying drawings in the following description show merely some embodiments of the present application, and a person of ordinary skill in the art may derive other drawings from these accompanying drawings without creative efforts.
FIG. 1 is a schematic flowchart of an application window adjustment method according to an embodiment of the present application;
FIG. 2 is a schematic flowchart of another application window adjustment method according to an embodiment of the present application;
FIG. 3a is a schematic diagram in which a start point of movement of a cursor is located on a window border according to a mere example of the present application not forming part of the claimed invention;
FIG. 3b is a schematic diagram in which a start point of movement of a cursor is located on a window main body according to an embodiment of the present application;
FIG. 4a is a schematic diagram showing an overall height and length adjustment for a circular target application window according to a mere example of the present application not forming part of the claimed invention;
FIG. 4b is a schematic diagram showing a height adjustment for a circular target application window according to a mere example of the present application not forming part of the claimed invention;
FIG. 4c is a schematic diagram showing another height adjustment for a target application window according to a mere example of the present application not forming part of the claimed invention;
FIG. 4d is a schematic diagram showing a length adjustment for a target application window according to a mere example of the present application not forming part of the claimed invention;
FIG. 4e is a schematic diagram showing another length adjustment for a target application window according to a mere example of the present application not forming part of the claimed invention;
FIG. 4f is a schematic diagram showing an overall length and height adjustment for a rectangular target application window according to a mere example of the present application not forming part of the claimed invention;
FIG. 5 is a schematic diagram showing position and direction adjustments for a target application window according to a mere example of the present application not forming part of the claimed invention;
FIG. 6 is a schematic flowchart of still another application window adjustment method according to an embodiment of the present application;
FIG. 7 is a schematic diagram showing an angle adjustment for a target application window according to an embodiment of the present application;
FIG. 8 is a schematic diagram of an overall system architecture for implementing an application window adjustment according to an embodiment of the present application;
FIG. 9 is a schematic block diagram of an application window adjustment apparatus according to an embodiment of the present application; and
FIG. 10 is a schematic block diagram of an electronic device according to an embodiment of the present application.

### Detailed Description

The technical solutions in the embodiments of the present application will be described clearly and completely below with reference to the accompanying drawings in the embodiments of the present application. Apparently, the described embodiments are only some rather than all of the embodiments of the present application. All other embodiments obtained by a person of ordinary skill in the art based on the embodiments of the present application without creative efforts shall fall within the protection scope of the present application.

It should be noted that the terms "first", "second", etc. in the description and claims of the present application as well as the above-mentioned accompanying drawings are used to distinguish similar objects, and are not necessarily used to describe a specific order or a precedence order. It should be understood that data termed in such a way may be interchanged where appropriate, so that the embodiments of the present application described herein can be implemented in a sequence other than those illustrated or described herein. In addition, the terms "include" and "have" and any variant thereof are intended to cover a non-exclusive inclusion, for example, a process, method, system, product, or server that includes a series of steps or units is not necessarily limited to those steps or units that are explicitly listed, but may include other steps or units not explicitly listed or inherent to such a process, method, product or device.

In the embodiments of the present application, the term "exemplary", "for example", etc. is used to represent an example, an illustration, or a description. Any embodiment or solution described by "exemplary" or "for example" in the embodiments of the present application should not be construed as being preferred or advantageous over other embodiments or solutions. To be precise, the term "exemplary" or "for example" is intended to present a related concept in a specific manner.

Currently, a user has a need to adjust a 2D application window when using a 2D application in a virtual space provided by an XR device. In view of this, the present application provides an application window adjustment solution. According to the solution, with the use of freedom and flexibility of a controller in the space, the purpose of adjusting the 2D application window in the virtual space can be achieved, so that the need of the user to adjust the 2D application window is met, and the user experience is improved.

An application window adjustment method according to an embodiment of the present application is first described in detail below with reference to the accompanying drawings.

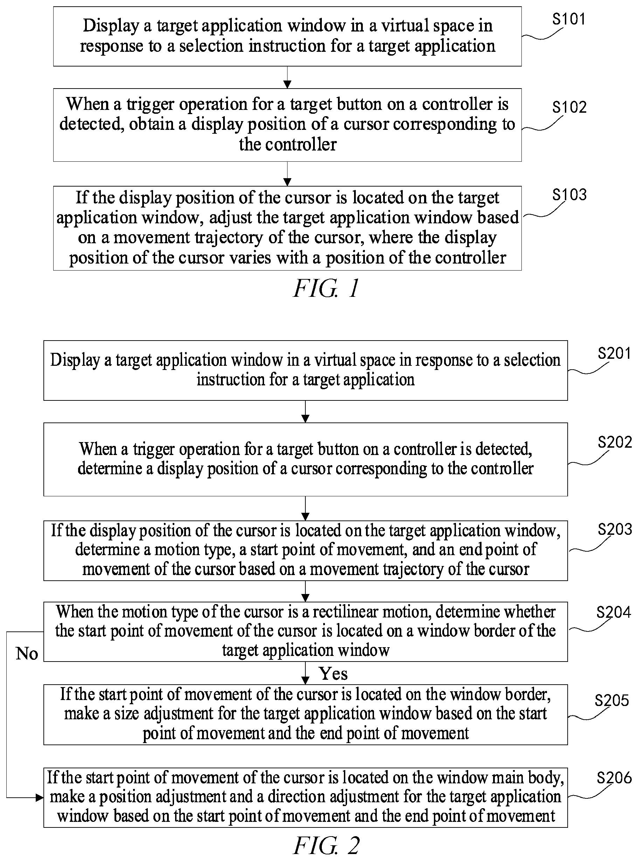

FIG. 1 is a schematic flowchart of an application window adjustment method according to an embodiment of the present application. The application window adjustment method according to this embodiment of the present application may be performed by an application window adjustment apparatus. The application window adjustment apparatus may be composed of hardware and/or software, and may be integrated into an electronic device. In the present application, the electronic device may be any hardware device capable of providing a virtual space. For example, the electronic device is an XR device, a mobile phone (such as a foldable phone or a large-screen phone), a tablet computer, etc. The specific type of the electronic device is not specifically limited in the present application. The XR device may be a VR device, an AR device, an MR device, etc.

As shown in FIG. 1, the method includes the following steps.

S101: Display a target application window in a virtual space in response to a selection instruction for a target application.

It should be understood that in the present application, the virtual space is a virtual environment that is provided for a user by the electronic device by combining a real scene and a virtual scene and that allows for human-computer interaction. In addition, the virtual space may be displayed as a three-dimensional image.

In this embodiment of the present application, the target application is preferably a 2D application.

Optionally, to use the electronic device, the user turns on the electronic device so that the electronic device enters a working state. Then, the electronic device may simulate, for the user, the virtual environment that is used to display various types of media content for various types of user interaction, so that the user may enter a corresponding virtual space.

After entering the virtual space, the user may select any target application in the virtual space to perform a corresponding operation. For example, the user may select a 2D browser, and then allow the 2D browser to run and perform an information search operation, etc. That is, when a selection instruction for any target application in the virtual space by the user is detected, the target application is opened in the virtual space, and an application window of the target application is presented.

The user may select any target application in the virtual space through eye tracking by gazing at the target application for a preset duration, to send the selection instruction for the target application to the electronic device. The preset duration may be flexibly set, for example, to 3 seconds (s) or 5s, according to actual requirements. Alternatively, the user may select the target application in other ways, such as by moving a controller to control a cursor to move onto the target application and pressing a confirm button (such as a home button) on the controller, to send the selection instruction for the target application to the electronic device, which is not specifically limited herein.

S102: When a trigger operation for a target button on a controller is detected, obtain a display position of a cursor corresponding to the controller.

In the present application, the controller may be but is not limited to: a controller grip, a hand controller, and other handheld devices with a button.

In addition, the target button on the controller may be any button on the controller. For example, the button may be any one of the buttons on the controller, such as a trigger button Grip or a joystick. For another example, the button may be a combination of buttons on the controller, such as of a trigger button Grip and a menu button. Specifically, the button may be flexibly set according to actual application requirements, which is not specifically limited herein.

Moreover, in the present application, a corresponding application window adjustment function may be preconfigured, on the electronic device, for the target button on the controller, so that once the user presses the target button after opening the target application, the electronic device can determine that the user triggers the application window adjustment function. Then, the electronic device enables and runs the application window adjustment function. As such, the user adjusts the target application window displayed in the virtual space based on the enabled application window adjustment function.

It is considered that the target application window presented in the virtual space may occlude any interaction object in the virtual space, such as a live streamer, a prop, or other objects. In this case, the user may need to adjust the target application window, to avoid occlusion of the interaction object in the virtual space. Alternatively, in a case where a presentation position of the target application window does not conform to an operation habit of the user, the user may have a need to adjust the target application window.

Based on the foregoing cases, the user may trigger (press) the target button on the controller that is associated with the application window adjustment function, to send to the electronic device an instruction to enable the application window adjustment function. Then, the electronic device enables the application window adjustment function associated with the target button based on the detection of the trigger operation for the target button. After the application window adjustment function is enabled, the display position of the cursor corresponding to the controller is obtained, so that it is determined whether to perform an application window adjustment operation based on the display position of the cursor.

In the present application, the display position of the cursor is usually located at an upper layer of an interaction interface in the virtual space, and is used to mark position information of the controller.

That is, when the controller sends a movement, the position of the cursor in the interaction interface changes accordingly.

A display shape of the cursor may be a dot, a circle, an angled arrow, crossed arrows, a hand shape, etc., which is not specifically limited herein.

In some feasible implementations, the controller may actively send pose information of its own to the electronic device at a preset time interval. The pose information includes position information and posture information. In addition, the pose information is relative pose information of the controller in a real space where the user is located.

It should be understood that the above preset time interval may be flexibly set based on a data display delay of the electronic device. For example, for a short delay, a small preset time interval is set, and for a long delay, a large preset time interval is set.

Generally, pose data of the controller may be obtained through a sensor mounted in the controller. The sensor includes but is not limited to: an inertial measurement unit (IMU for short), a nine-axis sensor, a triaxial sensor, a gyroscope, an accelerometer, and a magnetometer.

Then, the electronic device may determine the display position of the cursor based on the pose information sent by the controller, and mark the cursor at the determined display position. As such, when a subsequent change in a position of the controller occurs, the display position of the cursor changes accordingly.

It is considered that after the application window adjustment function is enabled, the user may suddenly not want to continue to adjust the target application window, or may not be able to continue to perform the application window adjustment operation due to the need to perform other operations, etc. In this case, the user may release the pressed target button to cancel the application window adjustment operation, such that when detecting that the target button on the controller is released, the electronic device stops the adjustment operation on the target application window, and disables the enabled application window adjustment function, so as to achieve the effect of saving energy of the device.

S103: If the display position of the cursor is located on the target application window, adjust the target application window based on a movement trajectory of the cursor, where the display position of the cursor varies with a position of the controller.

In the present application, the adjusting the target application window includes at least one of the following:
making a position adjustment for the target application window; making a direction adjustment for the target application window; making an angle adjustment for the target application window; and making a size adjustment for the target application window.

In some feasible implementations, after the display position of the cursor is determined, in the present application, it may be determined whether the display position of the cursor is located on the target application window. If it is determined that the display position of the cursor is located on the target application window, it indicates that the user is about to perform the application window adjustment operation. Otherwise, it indicates that the user has not started to perform the application window adjustment operation, in which case continuous obtaining of the display position of the cursor and determination of whether the display position of the cursor is located on the target application window are performed, until the display position of the cursor is located on the target application window, or the user cancels the application window adjustment operation.

It is considered that the target application window corresponds to a planar region, and coordinates of each point in the planar region are known. Therefore, in the present application, the determining whether the display position of the cursor is located on the target application window is specifically determining whether the display position of the cursor is located within a range of coordinates of all points in the planar region corresponding to the target application window. If the display position of the cursor is located within the range of coordinates of all points in the planar region corresponding to the target application window, it indicates that the cursor is located on the target application window. If the display position of the cursor is not located within the range of coordinates of all points in the planar region corresponding to the target application window, it indicates that the cursor is not located on the target application window.

It is considered that the user may adjust the target application window by moving the controller. Therefore, when it is determined that the display position of the cursor is located on the target application window, in the present application, the movement trajectory of the cursor corresponding to the controller may first be obtained, and the target application window is then adjusted based on the movement trajectory of the cursor.

In some feasible implementations, adjusting the target application window based on the movement trajectory of the cursor may involve: determining a motion type of the cursor, and a start point of movement and an end point of movement of the cursor based on the movement trajectory of the cursor, and then adjusting a position, a direction, an corner point, and/or a size of the target application window based on the motion type of the cursor, and the start point of movement and the end point of movement of the cursor.

In the technical solution according to this embodiment of the present application, the target application window is displayed in the virtual space in response to the selection instruction for the target application; when the trigger operation for the target button on the controller is detected, the display position of the cursor corresponding to the controller is obtained; and when the display position of the cursor is located on the target application window, the target application window is adjusted based on the movement trajectory of the cursor. According to the present application, an application window adjustment function is set in association with any button on the controller, so that the user can enable the application window adjustment function by triggering the button on the controller, and then adjust an application window displayed in the virtual space by manipulating the controller. In this way, with full use of freedom and flexibility of the controller in the space, the purpose of adjusting a 2D application window in the virtual space is achieved, so that the need of the user to adjust the 2D application window is met, and the user experience is improved.

As an optional implementation of the present application, considering that the movement trajectory of the cursor may be a straight line or a curve, in the present application, it is determined that the motion type of the cursor may be a curvilinear motion or a rectilinear motion based on the movement trajectory of the cursor. A detailed description of the adjustment for the target application window based on the rectilinear motion, the start point of movement of the cursor, and the end point of movement of the cursor when the motion type of the cursor is the rectilinear motion in the present application is specifically provided below with reference to FIG. 2.

As shown in FIG. 2, the method includes the following steps.

S201: Display a target application window in a virtual space in response to a selection instruction for a target application.

S202: When a trigger operation for a target button on a controller is detected, determine a display position of a cursor corresponding to the controller.

S203: If the display position of the cursor is located on the target application window, determine the motion type, the start point of movement, and the end point of movement of the cursor based on the movement trajectory of the cursor.

After the movement trajectory of the cursor is obtained, the start point of movement and the end point of movement of the cursor may be determined. As for the motion type of the cursor, the movement trajectory of the cursor may be analyzed and processed in different manners, to determine whether the motion type of the cursor is the rectilinear motion or the curvilinear motion. For example, the movement trajectory of the cursor may be analyzed and processed by using a force analysis method, an analytic method, a drawing method, or other methods, which is not specifically limited herein.

In some feasible implementations, after analysis of the movement trajectory of the cursor, if it is determined that the movement trajectory of the cursor is the curve, it indicates that the motion type of the cursor is the curvilinear motion; or if it is determined that the movement trajectory of the cursor is the straight line, it indicates that the motion type of the cursor is the rectilinear motion.

S204: When the motion type of the cursor is the rectilinear motion, determine whether the start point of movement of the cursor is located on a window border of the target application window. If the start point of movement of the cursor is located on the window border, S205 is performed; otherwise, S206 is performed.

It is considered that the target application window corresponds to a planar region, and a window border part and a window main body part in the planar region are known. In addition, the window border part and the window main body part each are composed of a plurality of points. Therefore, in the present application, the start point of movement of the cursor may be compared with a range of coordinates of points corresponding to the window border part. If the start point of movement of the cursor is located within the range of coordinates of points corresponding to the window border part, it is determined that the start point of movement of the cursor is located on the window border of the target application window. If the start point of movement of the cursor is not located within the range of coordinates of points corresponding to the window border part but within a range of coordinates of points corresponding to the window main body part, it is determined that the start point of movement of the cursor is located on a window main body of the target application window.

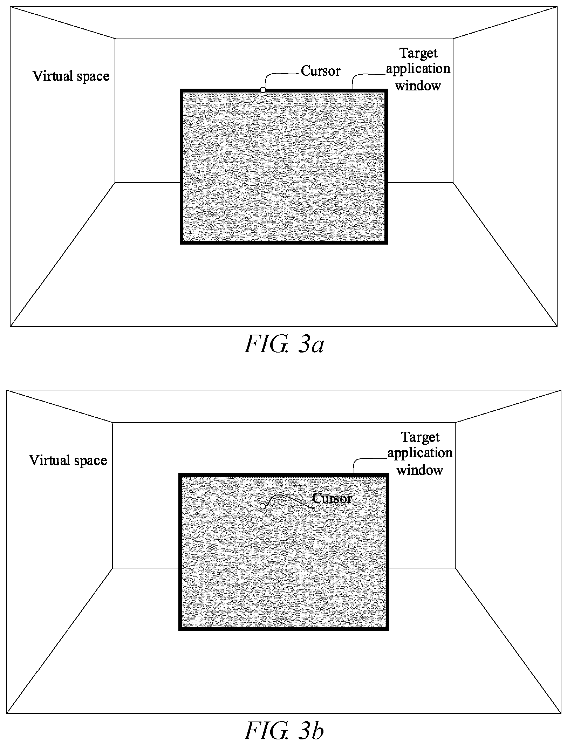

For example, the start point of movement of the cursor is located on the window border of the target application window, as shown in FIG. 3a; and the start point of movement of the cursor is located on the window main body of the target application window, as shown in FIG. 3b.

S205: If the start point of movement of the cursor is located on the window border, make a size adjustment for the target application window based on the start point of movement and the end point of movement.

Making the size adjustment for the target application window may be understood as adjusting the size of the target application window.

In some feasible implementations, making the size adjustment for the target application window may involve controlling, with the start point of movement of the cursor as a start point, the window border of the target application window to move from the start point of movement of the cursor to the end point of movement of the cursor, to make the size adjustment for the target application window.

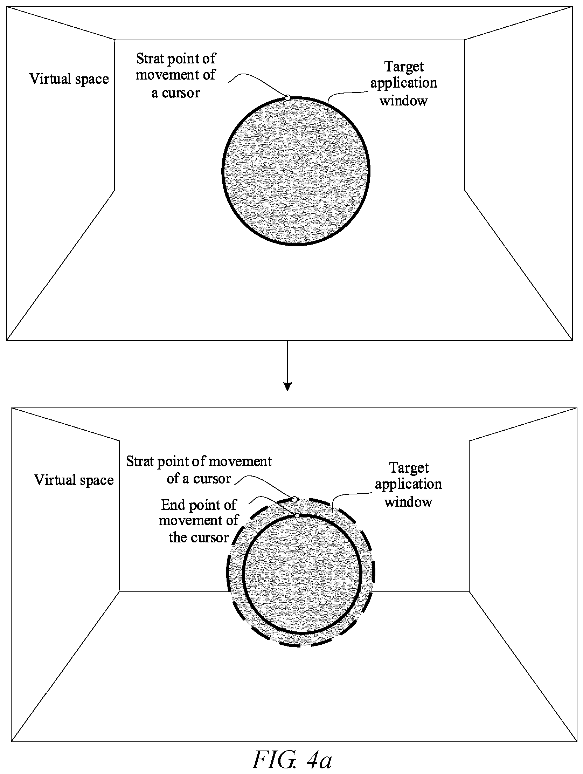

A shape of the target application window may be a circle, a rectangle, etc. For a circular target application window, an overall height and length adjustment for the circular target application window may be made based on the start point of movement and the end point of movement of the cursor, for example, as shown in FIG. 4a.

By contrast, a rectangular target application window may be composed of four window borders, namely, top, bottom, left, and right window borders. Therefore, in the present application, making the size adjustment for the rectangular target application window based on the start point of movement and the end point of movement of the cursor specifically involves the followings cases.

### Case 1:

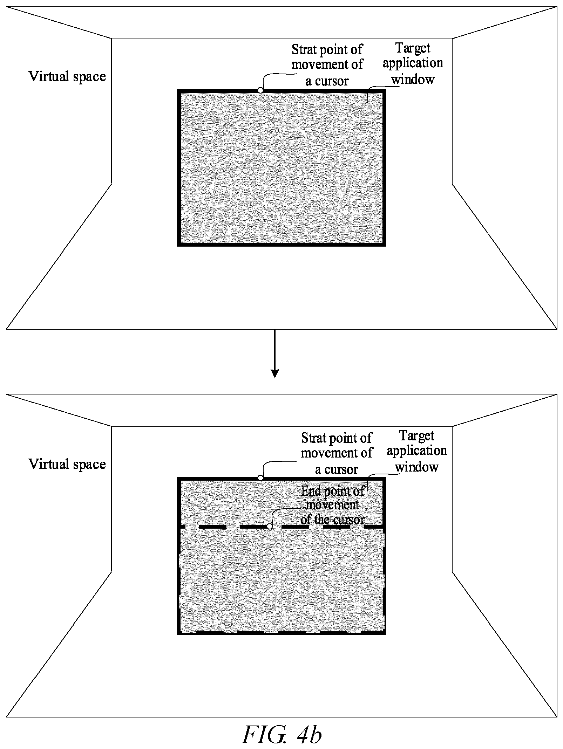

When the cursor is located on the top window border of the target application window, making the size adjustment for the rectangular target application window is specifically making a height adjustment for the target application window. For example, FIG. 4b shows a manner of making the height adjustment for the target application window.

### Case 2:

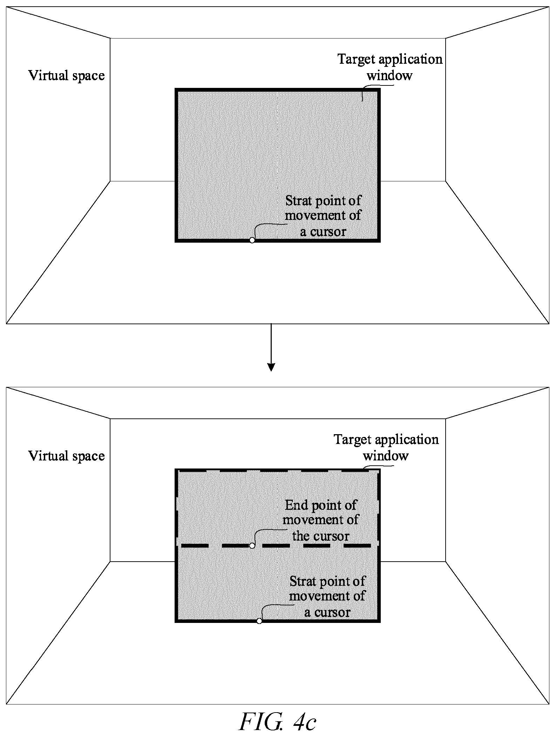

When the cursor is located on the bottom window border of the target application window, making the size adjustment for the rectangular target application window is specifically making a height adjustment for the target application window. For example, FIG. 4c shows another manner of making the height adjustment for the target application window.

### Case 3:

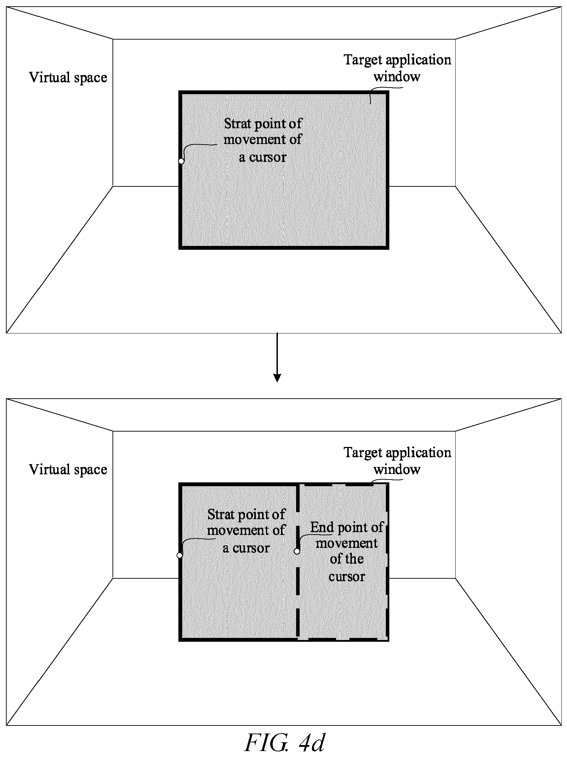

When the cursor is located on the left window border of the target application window, making the size adjustment for the rectangular target application window is specifically making a length adjustment for the target application window. For example, FIG. 4d shows a manner of making the length adjustment for the target application window.

### Case 4:

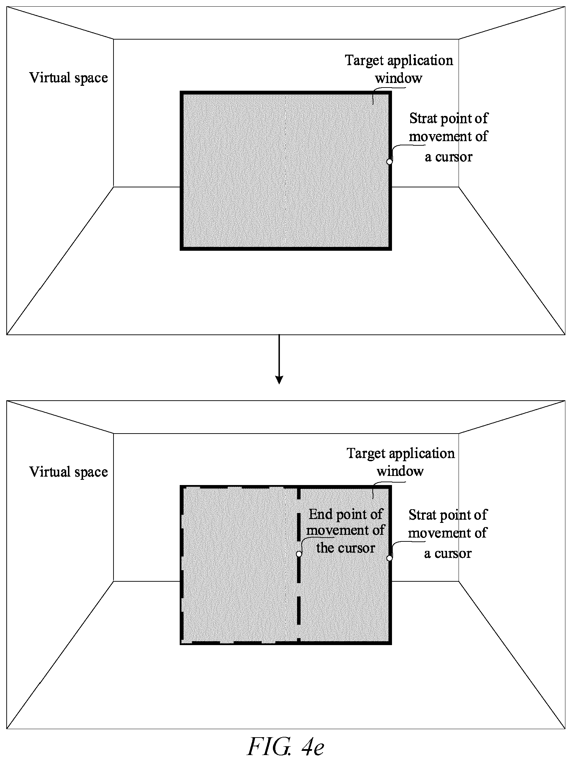

When the cursor is located on the right window border of the target application window, making the size adjustment for the rectangular target application window is specifically making a length adjustment for the target application window. For example, FIG. 4e shows another manner of making the length adjustment for the target application window.

In addition to the top, bottom, left, and right borders, the rectangular target application window includes four vertices, namely, a top-left vertex, a top-right vertex, a bottom-right vertex, and a bottom-left vertex. Therefore, when it is determined that the start point of movement of the cursor is located at a window edge and at any vertex of the window edge, in the present application, an overall length and width adjustment for the target application window may be made based on the start point of movement and the end point of movement of the cursor.

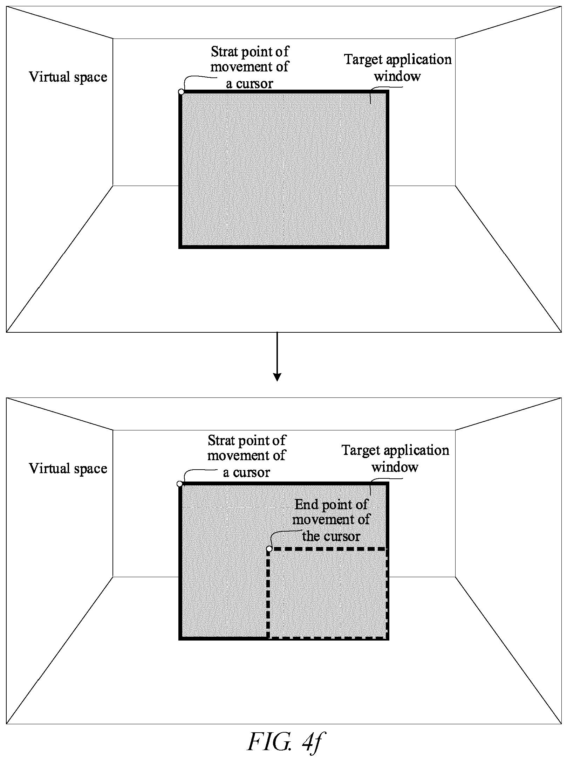

For example, as shown in FIG. 4f, when the cursor is located at the top-left vertex of the target application window, making the size adjustment for the rectangular target application window is specifically making a length and height adjustment for the target application window.

S206: If the start point of movement of the cursor is located on the window main body, make a position adjustment and a direction adjustment for the target application window based on the start point of movement and the end point of movement.

It is considered that when the position adjustment is made for the window, a direction of the window may change accordingly. Therefore, in the present application, the direction adjustment for the target application window is also made while the position adjustment is made for the target application window.

Optionally, in the present application, making the position adjustment and the direction adjustment for the target application window may involve controlling, with the start point of movement of the cursor as a start point, the target application window to move from the start point position of movement of the cursor to the end point of movement of the cursor, thereby making the position adjustment and the direction adjustment for the target application window.

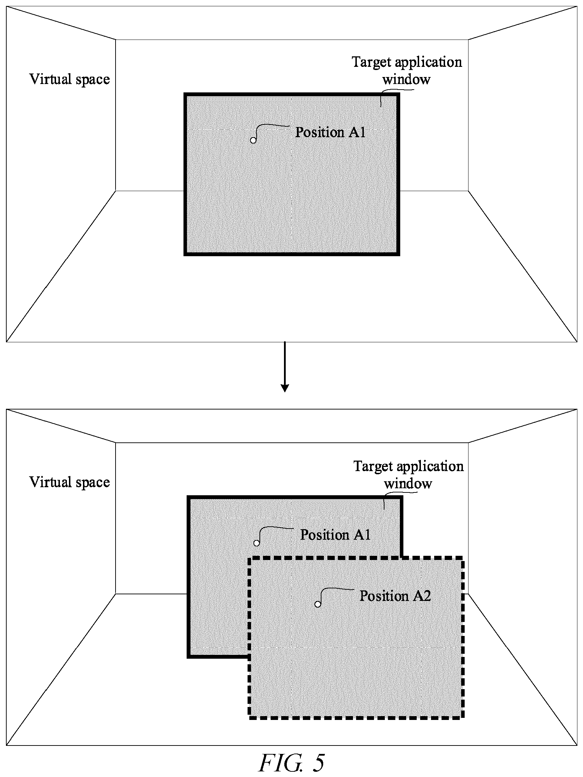

For example, as shown in FIG. 5, assuming that the start point of movement of the cursor is at a position A1, and the end point of movement of the cursor is at a position A2, the target application window may be moved from the position A1 to the position A2, to implement both the position and direction adjustments for the target application window.

In the technical solution according to this mere example of the present application not forming part of the claimed invention the target application window is displayed in the virtual space in response to the selection instruction for the target application; when the trigger operation for the target button on the controller is detected, the display position of the cursor corresponding to the controller is obtained; and when the display position of the cursor is located on the target application window, the target application window is adjusted based on the movement trajectory of the cursor. According to the present application, an application window adjustment function is set in association with any button on the controller, so that the user can enable the application window adjustment function by triggering the button on the controller, and then adjust an application window displayed in the virtual space by manipulating the controller. In this way, with full use of freedom and flexibility of the controller in the space, the purpose of adjusting a 2D application window in the virtual space is achieved, so that the need of the user to adjust the 2D application window is met, and the user experience is improved.

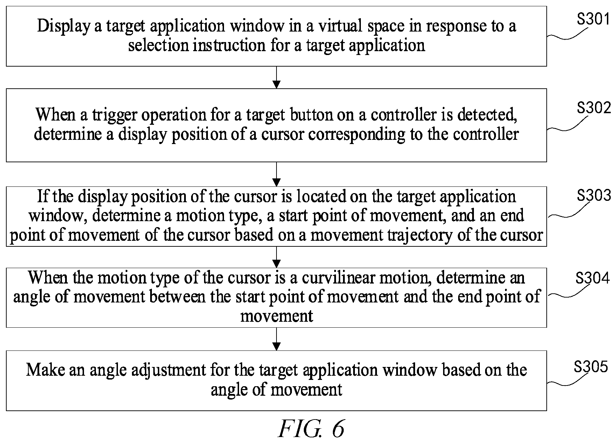

As an optional implementation of the present application, considering that the movement trajectory of the cursor may be a straight line or a curve, in the present application, it is determined that the motion type of the cursor may be a curvilinear motion or a rectilinear motion based on the movement trajectory of the cursor. A detailed description of the adjustment for the target application window based on the curvilinear motion, the start point of movement of the cursor, and the end point of movement of the cursor when the motion type of the cursor is the curvilinear motion in the present application is specifically provided below with reference to FIG. 6.

As shown in FIG. 6, the method may include the following steps.

S301: Display a target application window in a virtual space in response to a selection instruction for a target application.

S302: When a trigger operation for a target button on a controller is detected, determine a display position of a cursor corresponding to the controller.

S303: If the display position of the cursor is located on the target application window, determine the motion type, the start point of movement, and the end point of movement of the cursor based on the movement trajectory of the cursor.

S304: When the motion type of the cursor is the curvilinear motion, determine an angle of movement between the start point of movement and the end point of movement.

In some feasible implementations, determining the angle of movement between the start point of movement and the end point of movement of the cursor may involve calculating a tangent value based on the start point of movement and the end point of movement, and then calculating an arctangent value based on the tangent value, to obtain the angle of movement between the start point of movement and the end point of movement of the cursor.

For example, if the start point of movement of the cursor is a (x1, y1, z1), and the end point of movement of the cursor is b (x2, y2, z2), a three-dimensional coordinate system is constructed based on the start point of movement a and the end point of movement b, to determine two three-dimensional vectors, namely, a̅ = (x1, y1, z1) and b̅ = (x2, y2, z2). Then, a modulus of the vector a̅ is calculated as $\left|\vec{a}\right| = \sqrt{x {1}^{2} + y {1}^{2} + z {1}^{2}}$, a modulus of the vector b̅ is calculated as $\left|\vec{b}\right| = \sqrt{x {2}^{2} + y {2}^{2} + z {2}^{2}}$, and a dot product of the vector a̅ and the vector b̅ is calculated as a̅•b̅ = *x*1*x*2 *+ y*1*y*2 *+ z*1*z*2. Thus, an angle of movement between the vector a̅ and the vector b̅ is calculated as $θ = arc cos θ = arccos \frac{x 1 x 2 + y 1 y 2 + z 1 z 2}{\sqrt{x {1}^{2} + y {1}^{2} + z {1}^{2}} ∗ \sqrt{x {2}^{2} + y {2}^{2} + z {2}^{2}}}$.

Certainly, in addition to the foregoing calculation manner, the angle of movement may be calculated based on the start point of movement and the end point of movement of the cursor in other manners, which is not specifically limited herein.

S305: Make an angle adjustment for the target application window based on the angle of movement.

Optionally, making the angle adjustment for the target application window may involve controlling, with the start point of movement as a start point, the target application window to rotate by the angle of movement from a current angle corresponding to the start point, to make the angle adjustment for the target application window.

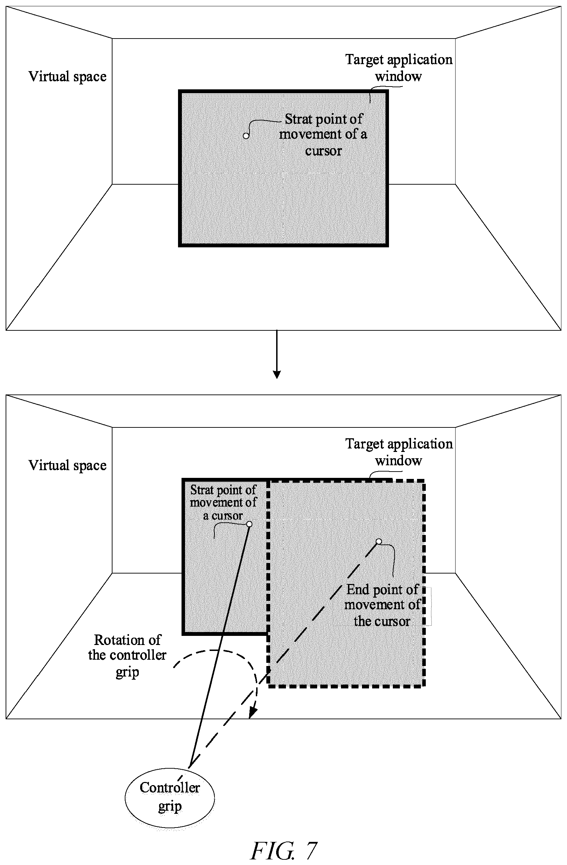

For example, as shown in FIG. 7, assuming that the start point of movement of the cursor is C, and the angle of movement is 90 degrees, with the point C as the start point, the target application window is controlled to rotate by 90 degrees from the current angle corresponding to the point C, to achieve the purpose of making the angle adjustment for the target application window.

In the technical solution according to this embodiment of the present application, the target application window is displayed in the virtual space in response to the selection instruction for the target application; when the trigger operation for the target button on the controller is detected, the display position of the cursor corresponding to the controller is obtained; and when the display position of the cursor is located on the target application window, the target application window is adjusted based on the movement trajectory of the cursor. According to the present application, an application window adjustment function is set in association with any button on the controller, so that the user can enable the application window adjustment function by triggering the button on the controller, and then adjust an application window displayed in the virtual space by manipulating the controller. In this way, with full use of freedom and flexibility of the controller in the space, the purpose of adjusting a 2D application window in the virtual space is achieved, so that the need of the user to adjust the 2D application window is met, and the user experience is improved.

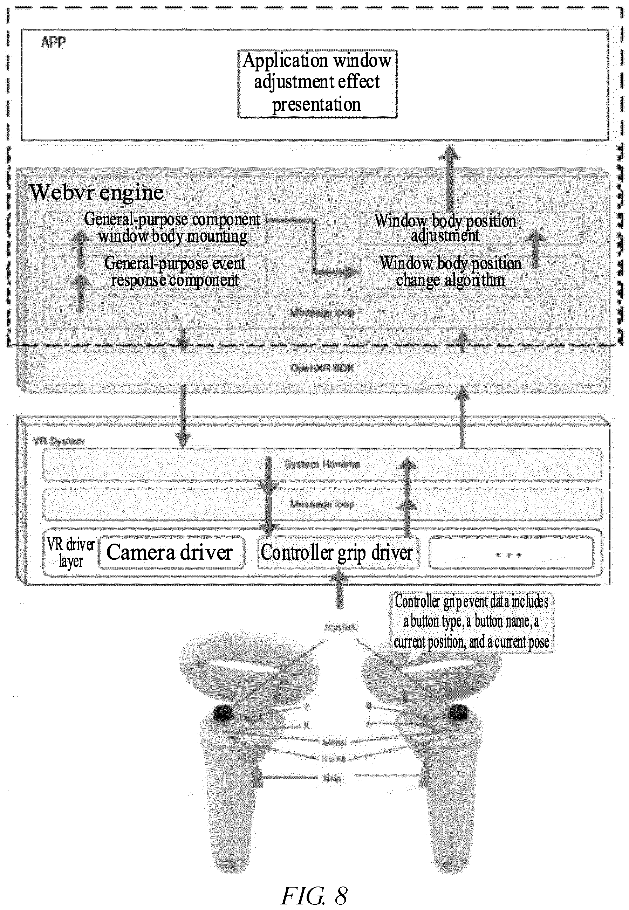

A general description of the application window adjustment method according to the present application is made below with reference to FIG. 8. As shown in FIG. 8, it is assumed that the controller is a controller grip, and the electronic device is a VR device. The VR device includes a VR system, a VR engine (Webvr engine), and a target application (2D APP).

Optionally, the VR engine is configured with various modules and a response message loop (Message loop), which are used to implement a function of adjusting the target application window. The modules may include: a general-purpose event response component module, a general-purpose component window body mounting module, a window body position change algorithm module, a window body position adjustment module, etc.

The general-purpose event response component module is configured to detect whether a display position of a cursor corresponding to a controller is located on a target application window.

The general-purpose component window body mounting module is configured to, when the cursor is located on the target application window, mount a mask layer on the target application window, to display the cursor on the mask layer. In the present application, the mask layer is imperceptive to the user.

The window body position change algorithm module is configured to determine a position change of the cursor based on a movement trajectory of the cursor.

The window body position adjustment module is configured to adjust a size, a position, a direction, and/or an angle of the target application window based on the position change of the cursor.

The adjustment for the target application window is specifically implemented as follows.

After a user opens any target application program in a virtual space, a processing module, such as a central processing unit, in the controller grip obtains controller grip event data (regarding which buttons are triggered, a button type, a button name, a real-time pose of the controller, etc.) in real time, and then sends the controller grip event data to a controller grip driver in a VR driver layer of the VR system. After receiving the controller grip event data, the controller grip driver continuously obtains information such as a controller grip pose and a button trigger from the controller grip event data, and then provides the obtained information to the response message loop (Message loop) of the VR system. Then, a system driver layer (System Runtime) of the VR system performs a reporting operation based on the information such as the controller grip pose and the button trigger in the response message loop (Message loop) of the VR system, to report the information such as the controller grip pose and the button trigger to a software development layer (OpenXR SDK) of the Webvr engine.

Then, the OpenXR SDK may record the information regarding the controller grip pose and which buttons are triggered, and send the information such as the controller grip pose and the button trigger to the response message loop (Message loop) of the Webvr engine. When capturing, from the response message loop, the information such as regarding which buttons on the controller grip are pressed and the controller grip pose, and determining that a pressed button is a target button associated with the application window adjustment function, the general-purpose event response component module of the Webvr engine sends an instruction to the general-purpose component window body mounting module, to cause the general-purpose component window body mounting module to mount, on the target application window, the mask layer imperceptive to the user, and to display the cursor on the mask layer. Then, the window body position change algorithm module continuously makes real-time adjustments for the position of the cursor based on the pose data reported by the controller grip, so that the window body pose change algorithm module may determine a movement, such as a motion type, a start point of movement, and an end point of movement, of the cursor based on the movement trajectory of the cursor, and then adjust the target application window based on the movement of the cursor. The adjustment for the target application window may be implemented through the window body position adjustment module, so that the user may move the controller grip while pressing the target button, to implement the adjustment operation for the target application window.

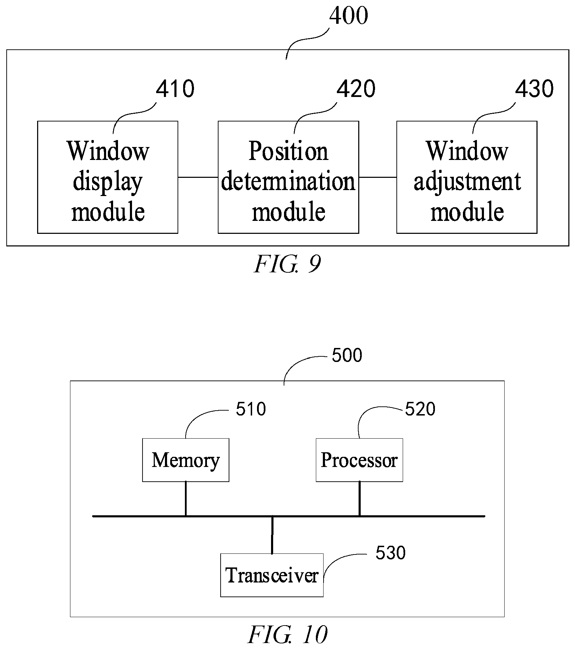

An application window adjustment apparatus according to an embodiment of the present application will be described below with reference to FIG. 9. FIG. 9 is a schematic block diagram of an application window adjustment apparatus according to an embodiment of the present application.

As shown in FIG. 9, the application window adjustment apparatus 400 includes: a window display module 410, a position determination module 420, and a window adjustment module 430.

The window display module 410 is configured to display a target application window in a virtual space in response to a selection instruction for a target application.

The position determination module 420 is configured to, when a trigger operation for a target button on a controller is detected, determine a display position of a cursor corresponding to the controller.

The window adjustment module 430 is configured to, if the display position of the cursor is located on the target application window, adjust the target application window based on a movement trajectory of the cursor, where the display position of the cursor varies with a position of the controller.

In an optional implementation of this embodiment of the present application, the window adjustment module 430 is configured to make at least one of the following: a size adjustment, a position adjustment, a direction adjustment, and an angle adjustment.

In an optional implementation of this embodiment of the present application, the window adjustment module 430 specifically includes:
an information determination unit configured to determine a motion type, a start point of movement, and an end point of movement of the cursor based on the movement trajectory of the cursor; and
a window adjustment unit configured to adjust the target application window based on the motion type, the start point of movement, and the end point of movement of the cursor.

In an optional implementation of this embodiment of the present application, the information determination unit is specifically configured to:
if the movement trajectory of the cursor is a curve, determine that the motion type of the cursor is a curvilinear motion; or
if the movement trajectory of the cursor is a straight line, determine that the motion type of the cursor is a rectilinear motion.

In an optional implementation of this mere example of the present application not forming part of the claimed invention, the window adjustment unit is specifically configured to:
when the motion type of the cursor is the rectilinear motion, determine whether the start point of movement of the cursor is located on a window border of the target application window; and
if the start point of movement of the cursor is located on the window border, make a size adjustment for the target application window based on the start point of movement and the end point of movement; or
if the start point of movement of the cursor is located on a main body of the window, make a position adjustment and a direction adjustment for the target application window based on the start point of movement and the end point of movement.

In an optional implementation of this mere example of the present application not forming part of the claimed invention, the window adjustment unit is further configured to:
with the start point of movement as a start point, control the window border to move from the start point of movement to the end point of movement, to make the size adjustment for the target application window.

In an optional implementation of this embodiment of the present application, the window adjustment unit is further configured to:
with the start point of movement as a start point, control the target application window to move from the start point of movement to the end point of movement, to make the position adjustment and the direction adjustment for the target application window.

In an optional implementation of this embodiment of the present application, the window adjustment unit is specifically configured to:
when the motion type of the cursor is the curvilinear motion, determine an angle of movement between the start point of movement and the end point of movement; and
make an angle adjustment for the target application window based on the angle of movement.

In an optional implementation of this embodiment of the present application, the window adjustment unit is further configured to:
with the start point of movement as a start point, control the target application window to rotate by the angle of movement from a current angle corresponding to the start point, to make the angle adjustment for the target application window.

In an optional implementation of this embodiment of the present application, the apparatus 400 further includes:
a response stopping module configured to, when it is detected that the target button on the controller is released, stop the adjustment operation on the target application window.

In an optional implementation of this embodiment of the present application, the target application is a 2D application.

In the technical solution according to this embodiment of the present application, the target application window is displayed in the virtual space in response to the selection instruction for the target application; when the trigger operation for the target button on the controller is detected, the display position of the cursor corresponding to the controller is obtained; and when the display position of the cursor is located on the target application window, the target application window is adjusted based on the movement trajectory of the cursor. According to the present application, an application window adjustment function is set in association with any button on the controller, so that the user can enable the application window adjustment function by triggering the button on the controller, and then adjust an application window displayed in the virtual space by manipulating the controller. In this way, with full use of freedom and flexibility of the controller in the space, the purpose of adjusting a 2D application window in the virtual space is achieved, so that the need of the user to adjust the 2D application window is met, and the user experience is improved.

It should be understood that the apparatus embodiment may correspond to the method embodiment described above. For similar descriptions, reference may be made to the method embodiment. To avoid repetitions, details are not described herein again. Specifically, the apparatus 400 shown in FIG. 9 may perform the method embodiment corresponding to FIG. 1, and the foregoing and other operations and/or functions of the modules in the apparatus 400 are respectively intended to implement corresponding procedures of the method in FIG. 1, which are not described herein again for the sake of brevity.

The apparatus 400 in this embodiment of the present application is described above with reference to the figure from the perspective of the functional modules. It should be understood that the functional modules may be implemented in the form of hardware, by instructions in the form of software, or by a combination of hardware and a software module. Specifically, the steps of the method embodiment of the first aspect in the embodiments of the present application may be performed by a hardware integrated logic circuit in a processor and/or the instructions in the form of software. The steps of the method according to the first aspect disclosed in conjunction with the embodiments of the present application may be directly embodied to be performed by a hardware decoding processor or by a combination of hardware in the decoding processor and a software module. Optionally, the software module may be located in a mature storage medium in the art, such as a random access memory, a flash memory, a read-only memory, a programmable read-only memory, an electrically erasable programmable memory, or a register. The storage medium is located in a memory. The processor reads information in the memory, which is used in combination with the hardware of the processor to perform the steps in the foregoing method embodiment of the first aspect.

FIG. 10 is a schematic block diagram of an electronic device according to an embodiment of the present application. As shown in FIG. 10, the electronic device 500 may include:
a memory 510 and a processor 520, where the memory 510 is configured to store a computer program and transmit program code to the processor 520. In other words, the processor 520 may call, from the memory 510, and run the computer program to implement the application window adjustment method in the embodiments of the present application.

For example, the processor 520 may be configured to perform the foregoing application window adjustment method embodiment according to instructions in the computer program.

In some embodiments of the present application, the processor 520 may include but is not limited to:
a general-purpose processor, a digital signal processor (DSP), an application specific integrated circuit (ASIC), a field programmable gate array (FPGA) or other programmable logic devices, a discrete gate or a transistor logic device, a discrete hardware component, etc.

In some embodiments of the present application, the memory 510 includes but is not limited to:
a volatile memory and/or a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external cache. By way of illustrative but not restrictive descriptions, many forms of RAMs may be used, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM).

In some embodiments of the present application, the computer program may be divided into one or more modules, which are stored in the memory 510 and executed by the processor 520, to perform the application window adjustment method according to the present application. The one or more modules may be a series of computer program instruction segments capable of performing specific functions. The instruction segment is used to describe an execution process of the computer program in the electronic device.

As shown in FIG. 10, the electronic device 500 may further include:
a transceiver 530, where the transceiver 530 may be connected to the processor 520 or the memory 510.

The processor 520 may control the transceiver 530 to communicate with other devices. Specifically, the processor may control the transceiver to send information or data to other devices or receive information or data sent by other devices. The transceiver 530 may include a transmitter and a receiver. The transceiver 530 may further include an antenna. There may be one or more antennae.

It should be understood that the components of the electronic device are connected to each other through a bus system. The bus system includes a power bus, a control bus, and a status signal bus, in addition to a data bus.

The present application further provides a computer storage medium having stored thereon a computer program that, when executed by a computer, enables the computer to perform the method according to the foregoing method embodiment.

An embodiment of the present application further provides a computer program product including program instructions that, when run on an electronic device, cause the electronic device to perform the method according to the foregoing method embodiment.

When implemented in software, all or some of the embodiments may be implemented in the form of the computer program product. The computer program product includes one or more computer instructions. When the computer program instructions are loaded and executed on a computer, all or some of the processes or functions according to the embodiments of the present application are generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or may be a data storage device, such as an integrated server or a data center, that includes one or more usable media. The usable medium may be a magnetic medium (for example, a floppy disk, a hard disk, or a magnetic tape), an optical medium (for example, a digital video disc (DVD)), a semiconductor medium (for example, a solid state disk (SSD)), etc.

A person of ordinary skill in the art may be aware that the modules and algorithm steps of various examples described in conjunction with the embodiments disclosed herein can be implemented in electronic hardware or a combination of computer software and electronic hardware. Whether these functions are performed in hardware or software depends on the specific application and design constraints of the technical solution. A person skilled in the art can implement the described functions by using different methods for each particular application, but such implementation should not be considered as going beyond the scope of the present application.

In several embodiments provided in the present application, it should be understood that the disclosed system, apparatus, and method may be implemented in other manners. For example, the apparatus embodiment described above is merely illustrative. For example, the division of modules is merely a logical functional division, and in actual implementations, there may be other division methods. For example, a plurality of modules or components may be combined or integrated into another system, or some features may be omitted or not implemented. In addition, the displayed or discussed mutual couplings, direct couplings, or communication connections may be implemented through some interfaces. The indirect couplings or communication connections between the apparatuses or modules may be implemented in electrical, mechanical, or other forms.

The modules described as separate parts may be or may not be physically separate, and parts displayed as modules may be or may not be physical modules, that is, they may be located at one position, or may be distributed over a plurality of network units. Some or all of the modules may be selected according to actual requirements to achieve the objective of the solution of this embodiment. For example, functional modules in the embodiments of the present application may be integrated into one processing module, the modules may be physically present separately, or two or more modules may be integrated into one module.

The foregoing descriptions are merely specific implementations of the present application, but are not intended to limit the scope of protection of the present application. Any variation or replacement readily figured out by a person skilled in the art within the technical scope disclosed in the present application shall fall within the scope of protection of the present application. Therefore, the protection scope of the present application shall be subject to the scope of protection of the claims.

## Claims

1. An application window adjustment method, wherein the method is applied to an extended reality (XR) device and comprises:
displaying a target application window in a three-dimensional virtual space in response to a selection instruction for a target application, wherein the virtual space is a virtual environment that is provided by an electronic device by combining a real scene and a virtual scene and that allows for human-computer interaction, and displaying the target application window in the virtual space comprises displaying the target application window of the target application in the virtual environment;
when a trigger operation for a target button on a controller is detected, determining a display position of a cursor corresponding to the controller; and
when the display position of the cursor is located on the target application window, adjusting the target application window based on a movement trajectory of the cursor, wherein the display position of the cursor varies with a pose of the controller;
wherein the adjusting the target application window comprises making an angle adjustment on the target application window;
wherein the adjusting the target application window based on a movement trajectory of the cursor comprises:
determining a motion type, a start point of movement, and an end point of movement of the cursor based on the movement trajectory of the cursor, wherein the motion type of the cursor comprises a curvilinear motion; and
adjusting the target application window based on the motion type, the start point of movement, and the end point of movement of the cursor;
wherein, in response to the movement trajectory of the cursor being a curve, determining that the motion type of the cursor is a curvilinear motion;
the adjusting the target application window based on the motion type, the start point of movement, and the end point of movement of the cursor comprises:
when the motion type of the cursor is the curvilinear motion, determining an angle of movement between the start point of movement and the end point of movement; and
making an angle adjustment for the target application window based on the angle of movement.

2. The method according to claim 1, **characterized in that** the adjusting the target application window further comprises making at least one of the following: a size adjustment, a position adjustment, and a direction adjustment.

3. The method according to claim 1, **characterized in that** the determining a motion type of the cursor based on the movement trajectory of the cursor, further comprises:
in response to the movement trajectory of the cursor being a straight line, determining that the motion type of the cursor is a rectilinear motion.

4. The method according to claim 3, **characterized in that** the adjusting the target application window based on the motion type, the start point of movement, and the end point of movement of the cursor comprises:
when the motion type of the cursor is the rectilinear motion, determining whether the start point of movement of the cursor is located on a window border of the target application window; and
when the start point of movement of the cursor is located on the window border, making a size adjustment for the target application window based on the start point of movement and the end point of movement; or
when the start point of movement of the cursor is located on a main body of the target application window, making a position adjustment and a direction adjustment for the target application window based on the start point of movement and the end point of movement.

5. The method according to claim 4, **characterized in that** the making a size adjustment for the target application window based on the start point of movement and the end point of movement comprises:
with the start point of movement as a start point, controlling the window border to move from the start point of movement to the end point of movement, to make the size adjustment for the target application window.

6. The method according to claim 4 or 5, **characterized in that** the making a position adjustment and a direction adjustment for the target application window based on the start point of movement and the end point of movement comprises:
with the start point of movement as a start point, controlling the target application window to move from the start point of movement to the end point of movement, to make the position adjustment and the direction adjustment for the target application window.

7. The method according to claim 1, **characterized in that** the making an angle adjustment for the target application window based on the angle of movement comprises:
with the start point of movement as a start point, controlling the target application window to rotate by the angle of movement from a current angle corresponding to the start point, to make the angle adjustment for the target application window.

8. The method according to any one of claims 1 to 7, **characterized in that** the method further comprises:
when it is detected that the target button on the controller is released, stopping an adjustment operation on the target application window.

9. The method according to any one of claims 1 to 8, **characterized in that** the target application is a 2D application.

10. An application window adjustment apparatus (400), wherein the apparatus is comprised in an extended reality (XR) device and comprises:
a window display module (410) configured to display a target application window in a three-dimensional virtual space in response to a selection instruction for a target application, wherein the virtual space is a virtual environment that is provided by an electronic device by combining a real scene and a virtual scene and that allows for human-computer interaction, and displaying the target application window in the virtual space comprises displaying the target application window of the target application in the virtual environment;
a position determination module (420) configured to, when a trigger operation for a target button on a controller is detected, determine a display position of a cursor corresponding to the controller; and
a window adjustment module (430) configured to, when the display position of the cursor is located on the target application window, adjust the target application window based on a movement trajectory of the cursor, wherein the display position of the cursor varies with a pose of the controller,
wherein the adjusting the target application window comprises making an angle adjustment on the target application window;
wherein the window adjustment module performs a step of adjusting the target application window based on a movement trajectory of the cursor, comprising:
determining a motion type, a start point of movement, and an end point of movement of the cursor based on the movement trajectory of the cursor, wherein the motion type of the cursor comprises a curvilinear motion; and
adjusting the target application window based on the motion type, the start point of movement, and the end point of movement of the cursor;
wherein, in response to the movement trajectory of the cursor being a curve, determining that the motion type of the cursor is a curvilinear motion;
the window adjustment module performs a step of adjusting the target application window based on the motion type, the start point of movement, and the end point of movement of the cursor, comprising:
when the motion type of the cursor is the curvilinear motion, determining an angle of movement between the start point of movement and the end point of movement; and
making an angle adjustment for the target application window based on the angle of movement.

11. An electronic device (500), **characterized by** comprising:
a processor (520) and a memory (510), wherein the memory (510) is configured to store a computer program, and the processor (520) is configured to call and run the computer program stored in the memory (510), to perform the method according to any one of claims 1 to 9.

12. A computer-readable storage medium, which is configured to store a computer program, wherein the computer program causes a computer to perform the method according to any one of claims 1 to 9.

13. A computer program product comprising program instructions, **characterized in that** the program instructions, when run on an electronic device (500), cause the electronic device (500) to perform the method according to any one of claims 1 to 9.

## Patentansprüche

1. Anwendungsfensteranpassungsverfahren, wobei das Verfahren auf eine Extended-Reality- (XR) Vorrichtung angewendet wird und Folgendes umfasst:
Anzeigen eines Zielanwendungsfensters in einem dreidimensionalen virtuellen Raum als Reaktion auf eine Auswahlanweisung für eine Zielanwendung, wobei der virtuelle Raum eine virtuelle Umgebung ist, die von einer elektronischen Vorrichtung durch Kombinieren einer realen Szene und einer virtuellen Szene bereitgestellt wird, und die eine Mensch-Computer-Interaktion ermöglicht, und Anzeigen des Zielanwendungsfensters im virtuellen Raum Anzeigen des Zielanwendungsfensters der Zielanwendung in der virtuellen Umgebung umfasst;
wenn eine Auslöseoperation für eine Zieltaste auf einer Steuereinheit erfasst wird, Bestimmen einer Anzeigeposition eines Zeigers, der der Steuereinheit entspricht; und
wenn sich die Anzeigeposition des Zeigers im Zielanwendungsfenster befindet, Anpassen des Zielanwendungsfensters basierend auf einer Bewegungsbahn des Zeigers, wobei die Anzeigeposition des Zeigers mit einer Pose der Steuereinheit variiert;
wobei das Anpassen des Zielanwendungsfensters umfasst, eine Winkelanpassung an dem Zielanwendungsfensters vorzunehmen;
wobei das Anpassen des Zielanwendungsfensters basierend auf einer Bewegungsbahn des Zeigers, Folgendes umfasst:
Bestimmen eines Bewegungstyps, eines Bewegungsstartpunkts und eines Bewegungsendpunkts des Zeigers, basierend auf der Bewegungsbahn des Zeigers, wobei der Bewegungstyp des Zeigers eine kurvenförmige Bewegung umfasst; und
Anpassen des Zielanwendungsfensters, basierend auf dem Bewegungstyp, dem Bewegungsstartpunkt und dem Bewegungsendpunkt;
wobei, als Reaktion darauf, dass die Bewegungsbahn des Zeigers eine Kurve ist, bestimmt wird, dass der Bewegungstyp eine kurvenförmige Bewegung ist;
das Anpassen des Zielanwendungsfensters, basierend auf dem Bewegungstyp, dem Bewegungsstartpunkt und dem Bewegungsendpunkt, Folgendes umfasst:
wenn der Bewegungstyp des Zeigers die kurvenförmige Bewegung ist, Bestimmen eines Bewegungswinkels zwischen dem Bewegungsstartpunkt und dem Bewegungsendpunkt; und
Vornehmen einer Winkelanpassung für das Zielanwendungsfenster, basierend auf dem Bewegungswinkel.

2. Verfahren nach Anspruch 1, **dadurch gekennzeichnet, dass** das Anpassen des Zielanwendungsfensters ferner Vornehmen mindestens eines des Folgenden umfasst: einer Größenanpassung, einer Positionsanpassung und einer Richtungsanpassung.

3. Verfahren nach Anspruch 1, **dadurch gekennzeichnet, dass** das Bestimmen eines Bewegungstyps des Zeigers, basierend auf der Bewegungsbahn des Zeigers, ferner Folgendes umfasst:
als Reaktion darauf, dass die Bewegungsbahn des Zeigers eine Gerade ist, Bestimmen, dass der Bewegungstyp eine geradlinige Bewegung ist.

4. Verfahren nach Anspruch 3, **dadurch gekennzeichnet, dass** das Anpassen des Zielanwendungsfensters, basierend auf dem Bewegungstyp, dem Bewegungsstartpunkt und dem Bewegungsendpunkt des Zeigers, Folgendes umfasst:
wenn der Bewegungstyp des Zeigers die geradlinige Bewegung ist, Bestimmen, ob sich der Bewegungsstartpunkt des Zeigers auf einem Fensterrand des Zielanwendungsfensters befindet; und
wenn sich der Bewegungsstartpunkt des Zeigers auf dem Fensterrand befindet, Vornehmen einer Größenanpassung für das Zielanwendungsfenster, basierend auf dem Bewegungsstartpunkt und dem Bewegungsendpunkt; oder
wenn sich der Bewegungsstartpunkt des Zeigers auf einem Hauptteil des Zielanwendungsfensters befindet, Vornehmen einer Positionsanpassung und einer Richtungsanpassung für das Zielanwendungsfenster, basierend auf dem Bewegungsstartpunkt und dem Bewegungsendpunkt.

5. Verfahren nach Anspruch 4, **dadurch gekennzeichnet, dass** das Vornehmen einer Größenanpassung für das Zielanwendungsfenster, basierend auf dem Bewegungsstartpunkt und dem Bewegungsendpunkt, Folgendes umfasst:
mit dem Bewegungsstartpunkt als einem Startpunkt, Steuern des Fensterrands, sodass er sich vom Bewegungsstartpunkt zum Bewegungsendpunkt bewegt, um die Größenanpassung für das Zielanwendungsfenster vorzunehmen.

6. Verfahren nach Anspruch 4 oder 5, **dadurch gekennzeichnet, dass** das Vornehmen einer Positionsanpassung und einer Richtungsanpassung für das Zielanwendungsfenster, basierend auf dem Bewegungsstartpunkt und dem Bewegungsendpunkt, Folgendes umfasst:
mit dem Bewegungsstartpunkt als einem Startpunkt, Steuern des Zielanwendungsfensters, sodass es sich vom Bewegungsstartpunkt zum Bewegungsendpunkt bewegt, um die Positionsanpassung und die Richtungsanpassung für das Zielanwendungsfenster vorzunehmen.

7. Verfahren nach Anspruch 1, **dadurch gekennzeichnet, dass** das Vornehmen einer Winkelanpassung für das Zielanwendungsfenster, basierend auf dem Bewegungswinkel, Folgendes umfasst:
mit dem Bewegungsstartpunkt als einem Startpunkt, Steuern des Zielanwendungsfensters, sodass es sich um den Bewegungswinkel von einem aktuellen Winkel, der dem Startpunkt entspricht, dreht, um die Winkelanpassung für das Zielanwendungsfenster vorzunehmen.

8. Verfahren nach einem der Ansprüche 1 bis 7, **dadurch gekennzeichnet, dass** das Verfahren ferner umfasst:
wenn erfasst wird, dass die Zieltaste auf der Steuereinheit losgelassen wird, Stoppen einer Anpassungsoperation an dem Zielanwendungsfenster.

9. Verfahren nach einem der Ansprüche 1 bis 8, **dadurch gekennzeichnet, dass** die Zielanwendung eine 2D-Anwendung ist.

10. Anwendungsfensteranpassungseinrichtung (400), wobei die Einrichtung in einer Extended-Reality- (XR) Vorrichtung umfasst ist und Folgendes umfasst:
ein Fensteranzeigemodul (410), das konfiguriert ist zum Anzeigen eines Zielanwendungsfensters in einem dreidimensionalen virtuellen Raum als Reaktion auf eine Auswahlanweisung für eine Zielanwendung, wobei der virtuelle Raum eine virtuelle Umgebung ist, die von einer elektronischen Vorrichtung durch Kombinieren einer realen Szene und einer virtuellen Szene bereitgestellt wird, und die eine Mensch-Computer-Interaktion ermöglicht, und Anzeigen des Zielanwendungsfensters im virtuellen Raum Anzeigen des Zielanwendungsfensters der Zielanwendung in der virtuellen Umgebung umfasst;
ein Positionsbestimmungsmodul (420), das konfiguriert ist, wenn eine Auslöseoperation für eine Zieltaste auf einer Steuereinheit erfasst wird, zum Bestimmen einer Anzeigeposition eines Zeigers, der der Steuereinheit entspricht; und
ein Fensteranpassungsmodul (430), das konfiguriert ist, wenn sich die Anzeigeposition des Zeigers im Zielanwendungsfenster befindet, zum Anpassen des Zielanwendungsfensters basierend auf einer Bewegungsbahn des Zeigers, wobei die Anzeigeposition des Zeigers mit einer Pose der Steuereinheit variiert,
wobei das Anpassen des Zielanwendungsfensters umfasst, eine Winkelanpassung an dem Zielanwendungsfensters vorzunehmen;
wobei das Fensteranpassungsmodul einen Schritt zum Anpassen des Zielanwendungsfensters basierend auf einer Bewegungsbahn des Zeigers durchführt, umfassend:
Bestimmen eines Bewegungstyps, eines Bewegungsstartpunkts und eines Bewegungsendpunkts des Zeigers, basierend auf der Bewegungsbahn des Zeigers, wobei der Bewegungstyp des Zeigers eine kurvenförmige Bewegung umfasst; und
Anpassen des Zielanwendungsfensters, basierend auf dem Bewegungstyp, dem Bewegungsstartpunkt und dem Bewegungsendpunkt;
wobei, als Reaktion darauf, dass die Bewegungsbahn des Zeigers eine Kurve ist, bestimmt wird, dass der Bewegungstyp eine kurvenförmige Bewegung ist;
das Fensteranpassungsmodul einen Schritt zum Anpassen des Zielanwendungsfensters basierend auf dem Bewegungstyp, dem Bewegungsstartpunkt und dem Bewegungsendpunkt durchführt, umfassend:
wenn der Bewegungstyp des Zeigers die kurvenförmige Bewegung ist, Bestimmen eines Bewegungswinkels zwischen dem Bewegungsstartpunkt und dem Bewegungsendpunkt; und
Vornehmen einer Winkelanpassung für das Zielanwendungsfenster, basierend auf dem Bewegungswinkel.

11. Elektronische Vorrichtung (500), **dadurch gekennzeichnet, dass** sie Folgendes umfasst:
einen Prozessor (520) und einen Speicher (510), wobei der Speicher (510) dazu konfiguriert ist, ein Computerprogramm zu speichern, und der Prozessor (520) dazu konfiguriert ist, das in dem Speicher (510) gespeicherte Computerprogramm aufzurufen und laufen zu lassen, um das Verfahren nach einem der Ansprüche 1 bis 9 durchzuführen.

12. Computerlesbares Speichermedium, das dazu konfiguriert ist, ein Computerprogramm zu speichern, wobei das Computerprogramm einen Computer veranlasst, das Verfahren nach einem der Ansprüche 1 bis 9 durchzuführen.

13. Computerprogrammprodukt, umfassend Programmanweisungen, **dadurch gekennzeichnet, dass** die Programmanweisungen, wenn sie auf einer elektronischen Vorrichtung (500) laufen, die elektronische Vorrichtung (500) veranlassen, das Verfahren nach einem der Ansprüche 1 bis 9 durchzuführen.

## Revendications

1. Procédé d'ajustement de fenêtre d'application, dans lequel le procédé est appliqué à un dispositif de réalité étendue (XR), et comprend :
l'affichage d'une fenêtre d'application cible dans un espace virtuel tridimensionnel en réponse à une instruction de sélection pour une application cible, dans lequel l'espace virtuel est un environnement virtuel qui est fourni par un dispositif électronique en combinant une scène réelle et une scène virtuelle et qui permet une interaction homme-machine, et l'affichage de la fenêtre d'application cible dans l'espace virtuel comprend l'affichage de la fenêtre d'application cible de l'application cible dans l'environnement virtuel ;
lorsqu'une opération de déclencheur pour un bouton cible sur un dispositif de commande est détectée, la détermination d'une position d'affichage d'un curseur correspondant au dispositif de commande ; et
lorsque la position d'affichage du curseur est située sur la fenêtre d'application cible, l'ajustement de la fenêtre d'application cible sur la base d'une trajectoire de mouvement du curseur, dans lequel la position d'affichage du curseur varie avec une pose du dispositif de commande ;
dans lequel l'ajustement de la fenêtre d'application cible comprend la réalisation d'un ajustement d'angle sur la fenêtre d'application cible ;
dans lequel l'ajustement de la fenêtre d'application cible sur la base d'une trajectoire de mouvement du curseur comprend :
la détermination d'un type de mouvement, d'un point de départ de mouvement et d'un point d'arrivée de mouvement du curseur sur la base de la trajectoire de mouvement du curseur, dans lequel le type de mouvement du curseur comprend un mouvement curviligne ; et
l'ajustement de la fenêtre d'application cible sur la base du type de mouvement, du point de départ de mouvement et du point d'arrivée de mouvement du curseur ;
dans lequel, en réponse à la trajectoire de mouvement du curseur étant une courbe, la détermination que le type de mouvement du curseur est un mouvement curviligne ;
l'ajustement de la fenêtre d'application cible sur la base du type de mouvement, du point de départ de mouvement et du point d'arrivée de mouvement du curseur comprend :
lorsque le type de mouvement du curseur est le mouvement curviligne, la détermination d'un angle de mouvement entre le point de départ de mouvement et le point d'arrivée de mouvement ; et
la réalisation d'un ajustement d'angle pour la fenêtre d'application cible sur la base de l'angle de mouvement.

2. Procédé selon la revendication 1, **caractérisé en ce que** l'ajustement de la fenêtre d'application cible comprend en outre au moins un parmi ce qui suit : un ajustement de taille, un ajustement de position et un ajustement de direction.

3. Procédé selon la revendication 1, **caractérisé en ce que** la détermination d'un type de mouvement du curseur sur la base de la trajectoire de mouvement du curseur comprend en outre :
en réponse à la trajectoire de mouvement du curseur étant une ligne droite, la détermination que le type de mouvement du curseur est un mouvement rectiligne.

4. Procédé selon la revendication 3, **caractérisé en ce que** l'ajustement de la fenêtre d'application cible sur la base du type de mouvement, du point de départ de mouvement et du point d'arrivée de mouvement du curseur comprend :
lorsque le type de mouvement du curseur est un mouvement rectiligne, la détermination si le point de départ de mouvement du curseur est situé sur un bord de fenêtre de la fenêtre d'application cible ; et
lorsque le point de départ de mouvement du curseur est situé sur le bord de fenêtre, la réalisation d'un ajustement de taille pour la fenêtre d'application cible sur la base du point de départ de mouvement et du point d'arrivée de mouvement ; ou
lorsque le point de départ de mouvement du curseur est situé sur un corps principal de la fenêtre d'application cible, la réalisation d'un ajustement de position et un ajustement de direction pour la fenêtre d'application cible sur la base du point de départ de mouvement et du point d'arrivée de mouvement.

5. Procédé selon la revendication 4, **caractérisé en ce que** la réalisation d'un ajustement de taille pour la fenêtre d'application cible sur la base du point de départ de mouvement et du point d'arrivée de mouvement comprend :
avec le point de départ de mouvement comme point de départ, la commande du bord de fenêtre pour se déplacer du point de départ de mouvement au point d'arrivée de mouvement, pour réaliser l'ajustement de taille pour la fenêtre d'application cible.

6. Procédé selon la revendication 4 ou 5, **caractérisé en ce que** la réalisation d'un ajustement de position et d'un ajustement de direction pour la fenêtre d'application cible sur la base du point de départ de mouvement et du point d'arrivée de mouvement comprend :
avec le point de départ de mouvement comme point de départ, la commande de la fenêtre d'application cible pour se déplacer du point de départ de mouvement au point d'arrivée de mouvement, pour réaliser l'ajustement de position et l'ajustement de direction pour la fenêtre d'application cible.

7. Procédé selon la revendication 1, **caractérisé en ce que** la réalisation d'un ajustement d'angle pour la fenêtre d'application cible sur la base de l'angle de mouvement comprend :
avec le point de départ de mouvement comme point de départ, la commande de la fenêtre d'application cible pour tourner selon l'angle de mouvement par rapport à un angle actuel correspondant au point de départ, pour réaliser l'ajustement d'angle pour la fenêtre d'application cible.

8. Procédé selon l'une quelconque des revendications 1 à 7, **caractérisé en ce que** le procédé comprend en outre :
lorsqu'il est détecté que le bouton cible du dispositif de commande est relâché, l'arrêt d'une opération d'ajustement sur la fenêtre d'application cible.

9. Procédé selon l'une quelconque des revendications 1 à 8, **caractérisé en ce que** l'application cible est une application 2D.

10. Appareil d'ajustement de fenêtre d'application (400), dans lequel l'appareil est compris dans un dispositif de réalité étendue (XR) et comprend :
un module d'affichage de fenêtre (410) configuré pour afficher une fenêtre d'application cible dans un espace virtuel tridimensionnel en réponse à une instruction de sélection pour une application cible, dans lequel l'espace virtuel est un environnement virtuel qui est fourni par un dispositif électronique en combinant une scène réelle et une scène virtuelle et qui permet une interaction homme-machine, et l'affichage de la fenêtre d'application cible dans l'espace virtuel comprend l'affichage de la fenêtre d'application cible de l'application cible dans l'environnement virtuel ;
un module de détermination de position (420) configuré pour, lorsqu'une opération de déclencheur pour un bouton cible sur un dispositif de commande est détectée, déterminer une position d'affichage d'un curseur correspondant au dispositif de commande ; et
un module d'ajustement de fenêtre (430) configuré pour, lorsque la position d'affichage du curseur est située sur la fenêtre d'application cible, ajuster la fenêtre d'application cible sur la base d'une trajectoire de mouvement du curseur, dans lequel la position d'affichage du curseur varie avec une pose du dispositif de commande,
dans lequel l'ajustement de la fenêtre d'application cible comprend la réalisation d'un ajustement d'angle sur la fenêtre d'application cible ;
dans lequel le module d'ajustement de fenêtre réalise une étape d'ajustement de la fenêtre d'application cible sur la base d'une trajectoire de mouvement du curseur, comprenant :
la détermination d'un type de mouvement, d'un point de départ de mouvement et d'un point d'arrivée de mouvement du curseur sur la base de la trajectoire de mouvement du curseur, dans lequel le type de mouvement du curseur comprend un mouvement curviligne ; et
l'ajustement de la fenêtre d'application cible sur la base du type de mouvement, du point de départ de mouvement et du point d'arrivée de mouvement du curseur ;
dans lequel, en réponse à la trajectoire de mouvement du curseur étant une courbe, la détermination que le type de mouvement du curseur est un mouvement curviligne ;
le module d'ajustement de fenêtre réalise une étape d'ajustement de la fenêtre d'application cible sur la base du type de mouvement, du point de départ de mouvement et du point d'arrivée de mouvement du curseur, comprenant :
lorsque le type de mouvement du curseur est le mouvement curviligne, la détermination d'un angle de mouvement entre le point de départ de mouvement et le point d'arrivée de mouvement ; et
la réalisation d'un ajustement d'angle pour la fenêtre d'application cible sur la base de l'angle de mouvement.

11. Dispositif électronique (500), **caractérisé en ce qu'**il comprend :
un processeur (520) et une mémoire (510), dans lequel la mémoire (510) est configurée pour stocker un programme informatique, et le processeur (520) est configuré pour invoquer et exécuter le programme informatique stocké dans la mémoire (510) pour réaliser le procédé selon l'une quelconque des revendications 1 à 9.

12. Support de stockage lisible par ordinateur qui est configuré pour stocker un programme informatique, dans lequel le programme informatique amène un ordinateur à réaliser le procédé selon l'une quelconque des revendications 1 à 9.

13. Produit de programme informatique comprenant des instructions de programme, **caractérisé en ce que** les instructions de programme, lorsqu'elles sont exécutées sur un dispositif électronique (500), amènent le dispositif électronique (500) à réaliser le procédé selon l'une quelconque des revendications 1 à 9.
